# EUROPÄISCHE PATENTSCHRIFT

(11) **EP 3 630 400 B1**
(45) Veröffentlichungstag und Bekanntmachung des Hinweises auf die Patenterteilung: **15.12.2021**
(21) Anmeldenummer: 18728125.8
(22) Anmeldetag: 29.05.2018
(51) Int. Cl.: B23B 51/04, B23P 15/28

(54) **EINLIPPENBOHRER UND VERFAHREN ZUM HERSTELLEN EINES EINLIPPENBOHRERS**
SINGLE LIP GUN DRILL AND METHOD TO MANUFACTURE A SINGLE LIP GUN DRILL
FORET 3/4 ET MÉTHODE DE FABRICATION D'UN FORET 3/4

(30) Priorität: 29.05.2017 DE 102017111630
(43) Veröffentlichungstag der Anmeldung: 08.04.2020
(73) Patentinhaber: botek Präzisionsbohrtechnik GmbH, 72585 Riederich (DE)
(72) Erfinder: WENZELBURGER, Juergen, 72555 Metzingen (DE)
(74) Vertreter: DREISS Patentanwälte PartG mbB
(86) Internationale Anmeldenummer: PCT/EP2018/064036
(87) Internationale Veröffentlichungsnummer: WO 2018/219926

(56) Entgegenhaltungen:
- WO-A1-2016/128462
- DE-A1-102010 051 248
- JP-B2- H0 724 970
- US-A- 4 565 471
- US-A1- 2004 091 327
- US-A1- 2013 309 029

## Beschreibung

Die Erfindung betrifft einen Einlippenbohrer gemäß dem Oberbegriff des Anspruchs 1. Ein solcher Einlippenbohrer ist aus der JP H07 24970 B2 bekannt. Die Erfindung betrifft auch ein Verfahren zum Herstellen eines Einlippenbohrers.

Die für die Offenbarung der Erfindung wesentlichen Begriffe werden unter anderem im Zusammenhang mit der Figurenbeschreibung erläutert. Darüber hinaus werden am Ende der Figurenbeschreibung einzelne Begriffe in der Art eines Glossars erläutert.

Aus DE4413932A1 (Mitsubishi) ist ein Einlippenbohrer mit axialen Strukturen bekannt, die in Richtung der Mittelachse des Einlippenbohrers auf der Spanfläche angebracht sind. Diese Strukturen dienen der Formung der Späne und haben das Ziel, einen höheren Vorschub des Bohrers durch günstige Formung der Späne zu ermöglichen. Das Profil der Struktur ist sehr komplex und zur Herstellung sind spezielle Schleifscheiben notwendig. Da das Profil abhängig vom Durchmesser ist, ist für jeden Bohrer-Durchmesser eine separate Schleifscheibe notwendig. Dies macht die Herstellung sehr aufwendig und teuer. Die Nebenschneide liegt trotz der Strukturen auf der Spanflächen-Ebene des Werkzeugs.

Aus JP8025120A (Mitsubishi) ist ein weiterer Einlippenbohrer bekannt, der eine Spanfläche aufweist, die zum Umfang des Bohrers hin ansteigt. Die Nebenschneide liegt somit oberhalb der Spanflächen-Ebene. Damit soll ebenfalls eine Formung kleiner und günstiger Späne erreicht werden, die dadurch besser abgeführt werden können. Auch diese Ausformung der Spanfläche erstreckt sich in Richtung der Mittelachse des Bohrers und ist wiederum abhängig vom Durchmesser des Bohrers, so dass für jeden Durchmesser eine separate Schleifscheibe notwendig ist. Dies macht die Herstellung wiederum sehr aufwendig und teuer.

Der gemeinsame Vorteil von Einlippenbohrern entsprechend DE4413932A1 und JP8025120A ist, dass beim stirnseitigen Nachschleifen die Struktur erhalten bleibt und der Nachschliff auf einer einfachen Maschine erfolgen kann.

Aus DE 10316116 A1 (TBT) ist ein Einlippenbohrer bekannt, der einen Spanformer aufweist, der sich parallel zur äußeren Schneide und somit quer zur Mittelachse des Einlippenbohrers erstreckt. Ein solcher Spanformer erstreckt sich über den größten Teil der äußeren Schneide und kann eine Breite von deutlich mehr als 1 mm haben, zum Beispiel 2 mm.
Diese Ausgestaltung eines Spanformers soll ebenfalls zu einer günstigen Formung von Spänen führen und damit eine schnellere Bearbeitung ermöglichen.
Die Herstellung eines solchen Spanformers muss jedoch sehr exakt erfolgen und erfolgt deshalb vorwiegend auf numerisch gesteuerten (CNC-) Maschinen. Weil der Spanformer parallel zu der äußeren Schneide verläuft, muss beim Nachschleifen eines solchen Einlippenbohrers der Bohrkopf um einem Betrag abgeschliffen werden, welcher mindestens der Breite des Spanformers entspricht, damit in die "unberührte" Spanfläche ein neuer Spanformer eingeschliffen werden kann. Das macht das Nachschleifen zeitaufwändig und teuer und führt dazu, dass dieser Einlippenbohrer nur für sehr wenige Nachschliffe geeignet ist.
Die bekannten Spanformer zielen alle darauf ab, eine günstige Formung der Späne zu erzielen und sollen damit eine schnellere Bearbeitung (= größeres Zerspanvolumen je Zeiteinheit) ermöglichen.
Aus US 2004/0091327 A1 und US 4 565471 sind Einlippenbohrer mit einer durchgehenden Spanfläche bekannt, die etwas unterhalb einer durch die Drehachse verlaufenden der Spanflächen-Ebene angeordnet sind. Anders ausgedrückt: In Drehrichtung des Einlippenbohrers liegt die Spanfläche hinter der Spanflächen-Ebene.

Aus JP H07 24970 B2 ist ein Einlippenbohrer bekannt, dessen Spanfläche in eine innere und eine äußere Spanfläche unterteilt ist. Die äußere Spanfläche weist eine Verschleißschutzschicht auf, während die innere Spanfläche keine Verschleißschutzschicht aufweist. Die höhere Reibung zwischen den Spänen und der innere Spanfläche führt zu kürzeren Spänen.
Aus WO 2016/128462 A1 ist ein Einlippenbohrer mit einer abgesetzten Spanfläche bekannt, die in Drehrichtung des Einlippenbohrers vor der Spanflächen-Ebene liegt.
Der Mittenverlauf der mit einem Einlippenbohrer erzeugten Bohrungen ist wichtiger ein Aspekt der Bohrungsqualität. Als Mittenverlauf wird beim Bohrvorgang die Abweichung der Mittelachse der realen Bohrung von der theoretischen Lage der Bohrung bezeichnet. Der Mittenverlauf wird in Millimetern [mm] angegeben. Man ist bestrebt, einen möglichst kleinen Mittenverlauf zu erreichen. Im Idealfall befindet sich die reale Bohrung genau dort, wo sie sein sollte, und der Mittenverlauf ist gleich null. Einlippenbohrer zeichnen sich gegenüber anderen Bohrern durch einen vergleichsweise geringen Mittenverlauf aus.

### Aufgabe der Erfindung

Der Erfindung liegt die Aufgabe zugrunde, einen Eilippenbohrer zu schaffen, der besonders geringe Mittenverlaufswerte in Verbindung mit einer besonders kleinen Streuung des Mittenverlaufs aufweist. Er soll außerdem einen sehr einfachen Anschliff haben sowie einfach und kostengünstig nachschleifbar sein.

Bei einem Einlippenbohrer der eingangs beschriebenen Art wird die Aufgabe erfindungsgemäß durch die Merkmale des Anspruchs 1 gelöst.

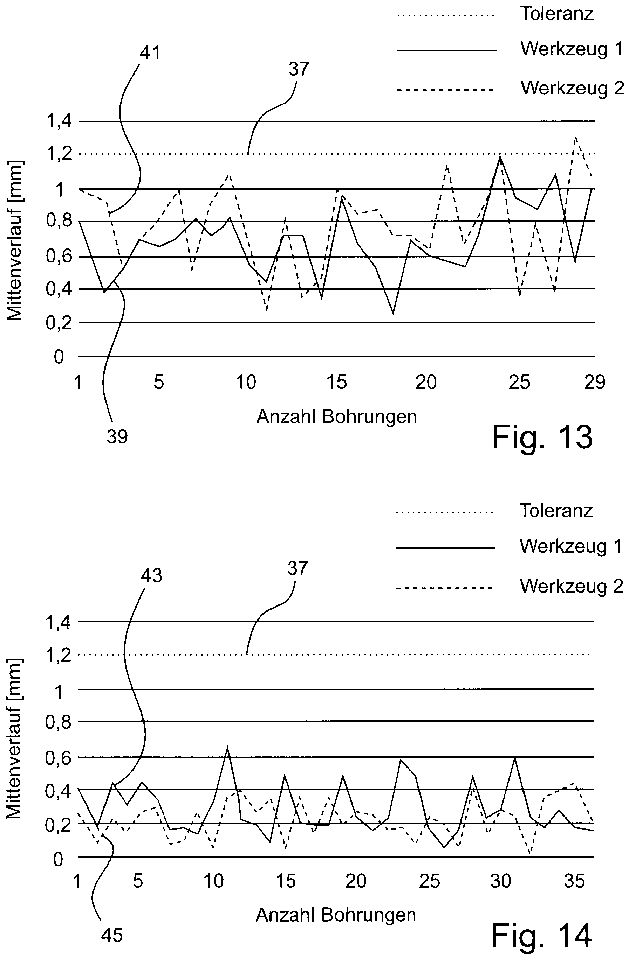

Es hat sich bei Bohrversuchen herausgestellt, dass sich durch diese fertigungstechnisch einfach zu realisierende Maßnahme eine drastische Verringerung des Mittenverlaufs bei geleichzeitiger Erhöhung der Standzeit des erfindungsgemäßen Einlippenbohrers einstellt. Anhand der Figuren 13 und 14 wird dieser Effekt erläutert und quantifiziert.

Die Aufgabe der Erfindung wird auch durch die Merkmale des Verfahrensanspruchs 14 gelöst. Die erfindungsgemäße Weiterbildungen eines aus dem Stand der Technik bekannten Einlippenbohrers umfassen das Einschleifen einer oder mehrerer zusätzlicher Flächen in die Spanfläche am Bohrkopf. Alle diese zusätzlichen Flächen erstrecken sich in Richtung der Mittelachse des Bohrers (bzw. durch Modifikation der Spanfläche eines Einlippenbohrers) und sind in mehreren nacheinander folgenden Schritten mit einfachen Schleifscheiben herstellbar, die in axialer Richtung relativ zu dem Bohrkopf verfahren werden. Dadurch kann die Herstellung dieser Flächen(n) vergleichsweise einfach und günstig erfolgen. Es sind keine speziellen Schleifscheiben erforderlich; mit wenigen (zylindrischen) Schleifscheiben kann ein weiter Bereich von Durchmessern abgedeckt werden. Außerdem kann der Bohrkopf so eingespannt bleiben, wie beim Schleifen der Spanfläche.

Ein weiterer Vorteil besteht darin, dass der Anschliff eine prismatische Form hat. Das führt zu dem zusätzlichen Vorteil, dass beim stirnseitigen Nachschleifen eines stumpf gewordenen erfindungsgemäßen Einlippenbohrers keine nachschleifen an den Spanflächen erforderlich ist, sondern lediglich die Freifläche so weit abgeschliffen werden muss, bis die stumpf gewordene Schneide wieder scharf ist. In vielen Fällen ist es ausreichend, wenn 0,3 mm oder 0,5 mm abgetragen werden. Das spart Zeit und Kosten beim Nachschleifen ein. Außerdem kann der erfindungsgemäße Einlippenbohrer sehr oft nachgeschliffen werden. Der Nachschliff kann auf einer einfachen Maschine erfolgen.

Die Form der erfindungsgemäßen Spanfläche des Einlippenbohrers kann in einem Querschnitt zur Mittelachse wie folgt beschrieben werden und erstreckt sich wenigstens über einen Teil des Bohrkopfes in Richtung der Mittelachse des Bohrers.

Die Spanfläche wird unterteilt in eine innere Spanfläche, die sich von der Mittelachse radial in Richtung Umfang des Bohrers erstreckt und eine äußere Spanfläche, die sich vom Umfang des Bohrers radial in Richtung der Mittelachse des Bohrers erstreckt.

Die innere Spanfläche ist eben ausgeführt, verläuft parallel zur Mittelachse des Bohrers und fällt mit der Spanflächen-Ebene zusammen. Damit wird es möglich, Löcher ins Volle zu bohren und bis zum Zentrum zu zerspanen.

Die äußere Spanfläche kann ebenfalls eben ausgeführt und parallel zur Mittelachse des Bohrers angeordnet sein. Sie kann sich, von der Spitze des Bohrkopfes ausgehend, je nach Anwendungsfall in axialer Richtung über die gesamte Länge des Bohrkopfes oder nur über einen Teil der Länge des Bohrkopfes erstrecken.

Die äußere Spanfläche ist erfindungsgemäß so ausgeführt, dass die Nebenschneide des Einlippenbohrers einen um mindestens 0,05 mm größeren Abstand zur Spanflächen-Ebene hat als die innere Spanfläche. Dies wird erreicht durch ein Absetzen der äußeren Spanfläche gegenüber der inneren Spanfläche und/oder ein Neigen der äußeren Spanfläche gegenüber der inneren Spanfläche.

### Vorteile der Erfindung

Durch diese geometrische Änderung gegenüber einem üblichen Einlippenbohrer ändern sich Richtung und Betrag der an der Außenschneide angreifenden Kraftvektoren im Zerspanungsprozess.

Der erfindungsgemäße Einlippenbohrer zeichnet sich durch folgende positive Eigenschaften gegenüber einem üblichen Einlippenbohrer aus:
- Reduzierung des Mittenverlaufs der Bohrung.
- Reduzierung der Streuung des Mittenverlaufs.
- Reduzierung des Verschleißes an der Schneidkante im Bereich der Außenschneide.
- Einfache Herstellung und einfaches Nachschleifen.

In einer ersten Ausführungsform ist die äußere Spanfläche parallel zur inneren Spanfläche, der Abstand von der Mittelachse ist jedoch größer als der Abstand der inneren Spanfläche von der Mittelachse. Dadurch entsteht ein Absatz, der durch eine Trennfläche zwischen äußerer und innerer Spanfläche überbrückt wird. Der Winkel dieser Trennfläche kann 90° oder mehr zur äußeren Spanfläche betragen.

In einer zweiten Ausführungsform ist die äußere Spanfläche unter einem Winkel zur inneren Spanfläche angeordnet. Bei beiden Ausführungsformen ist vorgesehen, dass die Nebenschneide, also die Berührungslinie von äußerer Spanfläche und Rundschlifffase, um ungefähr die Hälfte der Breite der Rundschlifffase unter der Mittelachse des Bohrers liegt. Die Breite der Rundschlifffase wird dadurch auf ungefähr die Hälfte reduziert.

Bei weiteren Ausführungsformen kann zusätzlich eine Nut mit einem bogenförmigen Querschnitt zwischen der äußeren und der inneren Spanfläche angebracht sein. Diese Nut wird Spanteilernut genannt, kann die Herstellung der äußeren Spanfläche vereinfachen und führt zusätzlich noch zu einer Formung der Späne. Diese Nut kann sich von der Spitze des Bohrkopfes ausgehend je nach Anwendungsfall über die gesamte Länge des Bohrkopfes oder nur über einen Teil der Länge des Bohrkopfes erstrecken.

Insgesamt kann man die erfindungsgemäßen Spanflächen in vier Grundstrukturen einteilen:
1. Innere Spanfläche und äußere Spanfläche sind parallel zueinander; keine Spanteilernut vorhanden.
2. Innere Spanfläche und äußere Spanfläche schließen einen stumpfen Winkel ein; keine Spanteilernut vorhanden.
3. Innere Spanfläche und äußere Spanfläche sind parallel zueinander; Spanteilernut vorhanden.
4. Innere Spanfläche und äußere Spanfläche schließen einen stumpfen Winkel ein; Spanteilernut vorhanden.

Mit allen diesen Ausführungsformen wurden exzellente Werte des Mittenverlaufs erzielt.

Eine weitere signifikante Verbesserung des Mittenverlaufs kann erzielt werden, wenn die Breite der Rundschschlifffase reduziert wird. Teilweise wurde die Breite der Rundschschlifffase auf 0,1 mm bis 0,2 mm reduziert. Mit diesen sehr schmalen Rundschschlifffasen wurden nochmals verbesserte Mittenverläufe erreicht. Dieser überraschende Effekt trägt auch dazu bei, dass es möglich ist, herkömmliche Einlippenbohrer so umzuschleifen, dass eine erfindungsgemäße äußere Spanfläche entsteht. Beim Umschleifen handelsüblicher Einlippenbohrer zu erfindungsgemäßen Einlippenbohrer verringert sich die Breite der Rundschlifffase zwangsläufig.

Es hat den Anschein, dass sich dadurch die an der Rundschlifffase angreifenden Reibkräfte und Drücke gegenüber einem aus dem Stand der Technik bekannten Einlippenbohrer ändern.

Weitere Ausführungsformen können sich aus den folgenden möglichen Modifikationen ergeben und können auch in unterschiedlichen Weisen miteinander kombiniert werden.

Die äußere Spanfläche, die Spanteilernut, die Führungsleisten und/oder der Umfang des Bohrkopfs oder der gesamte Bohrkopf können mit einer Funktionsbeschichtung (Verschleißschutz) versehen sein.

Die äußere Spanfläche erstreckt sich radial nur über einen kleinen Teil des Bohrkopfes. Beispielsweise nur über 1/4 des Bohrer-Durchmessers.

Der Bohrkopf hat eine Gruppe oder zwei Gruppen von Führungsleisten. Wenn der Bohrkopf zwei Gruppen von Führungsleisten am Umfang aufweist, dann ist eine Gruppe im Bereich der Bohrerspitze angeordnet und die zweite Gruppe ist in axialer Richtung beabstandet zu der ersten Gruppe in Richtung der Einspannhülse angeordnet.

Dieser Führungsleisten der ersten Gruppe und/oder der zweiten Gruppe können zusätzlich noch eine Verjüngung in Richtung hinteres Ende aufweisen oder zylindrisch sein.

Die Anordnung der Führungsleisten am Umfang der ersten und der zweiten Gruppe kann sich unterscheiden. Die beiden Bereiche können direkt aneinander anschließen oder es kann ein Absatz zwischen den beiden Bereichen vorhanden sein.

An einem realen Einlippenbohrer gemäß der dritten Ausführungsform wurden folgende Abmessungen angewendet:
D = 9 mm
L1 = 3 mm
L32 = 0,2 mm
L33 = 0,4 mm
L34 = 1,5 mm
L35 = 0,3 mm
L36 = 1,5 mm
L37 = L33 - L32 = 0,2 mm

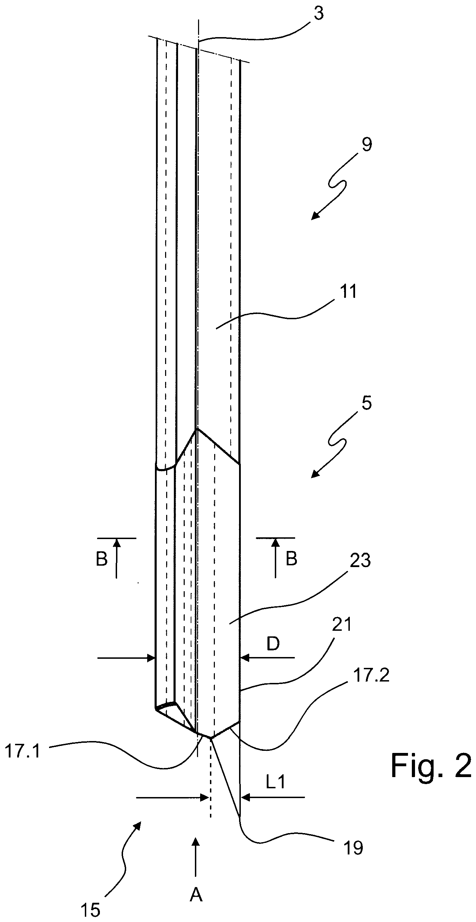

Die Maße sind in den Figuren 2, 3 sowie 7 bis 10 eingetragen.

Zwei Gruppen von Führungsleisten.
Bohrkopf am Umfang beschichtet.
Äußere Spanfläche und Spanteilernut unbeschichtet.
Die Länge der Spanteilernut entspricht der Länge des Bereichs mit der ersten Gruppe 47 von Führungsleisten. Der Anschliff ist unbeschichtet.

Mit diesem Werkzeug wurde eine deutliche Verbesserung des Mittenverlaufes und insbesondere der Streuung des Mittenverlaufs erzielt (siehe die Figur 14).

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in der - beispielhaft - mehrere Ausführungsbeispiele der Erfindung dargestellt sind.

### Zeichnung

Es zeigen:
Figuren 1 bis 4 einen Einlippenbohrer (Stand der Technik),
Figuren 5 bis 12 Ausführungsbeispiele erfindungsgemäßer Einlippenbohrer und
Figuren 13 und 14 Diagramme zur Veranschaulichung der Vorteile der erfindungsgemäßen Einlippenbohrer.

### Beschreibung der Ausführungsbeispiele

Bei allen Figuren werden für die gleichen Elemente beziehungsweise Bauteile die gleichen Bezugszeichen verwendet.

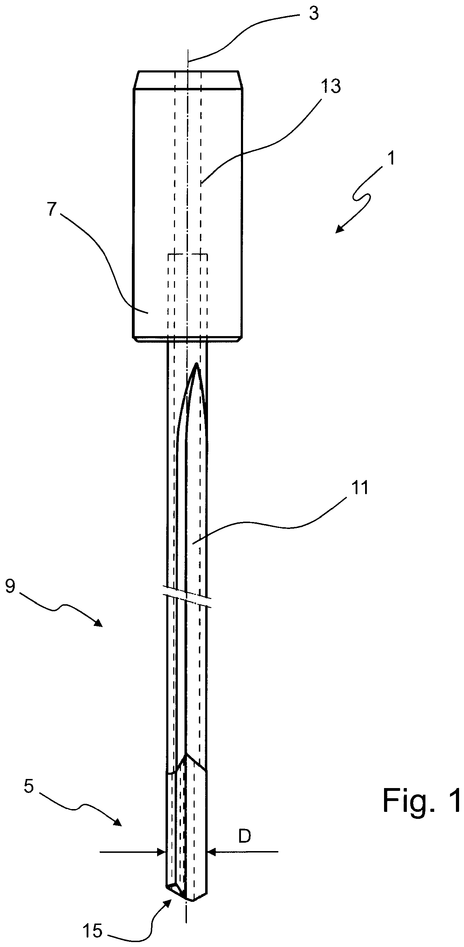

In der Figur 1 ist ein in seiner Gesamtheit mit dem Bezugszeichen 1 versehener Einlippenbohrer dargestellt.

Eine Mittelachse 3 ist gleichzeitig auch die Drehachse des Einlippenbohrers 1 beziehungsweise des Werkstücks (nicht dargestellt), wenn dieses beim Bohren in Rotation versetzt wird.

Ein Durchmesser des Einlippenbohrers 1 ist mit D bezeichnet. Der Einlippenbohrer 1 setzt sich aus drei Hauptkomponenten zusammen, nämlich einem Bohrkopf 5, einer Einspannhülse 7 und einem Schaft 9.

Der Schaft wird üblicherweise aus Stahl oder aus demselben oder einem ähnlichen Material wie der Bohrkopf hergestellt. Schäfte aus Stahl werden üblicherweise durch Umformen als profiliertes Rohr mit V-förmiger Nut hergestellt.

Der Schaft überträgt das Drehmoment von der Einspannhülse, die von der Maschinenspindel angetrieben wird, auf die am Bohrkopf ausgebildete(n) Schneide(n) an denen der Zerspanungsvorgang erfolgt.

Die Einspannhülse wird üblicherweise aus Stahl oder aus demselben Material wie der Schaft hergestellt. Sie ist meist zylinderförmig und dient der Aufnahme in einer Spannvorrichtung der Spindel der Werkzeugmaschine.

Der Bohrkopf 5, die Einspannhülse 7 und der Schaft 9 sind bei dem dargestellten Ausführungsbeispiel drei verschiedene Bauteile, die durch Löten, Kleben oder sonstige Fügeverfahren miteinander zu dem Einlippenbohrer 1 zusammengefügt wurden. Es ist jedoch auch möglich, beispielsweise den Schaft 9 und den Bohrkopf 5 aus einem Stück herzustellen. Ebenso ist es auch möglich, die Einspannhülse 7 und den Schaft 9 aus einem Stück herzustellen. Es ist aber auch möglich, den gesamten Einlippenbohrer 1 aus einem Stück herzustellen.

Die äußeren Flächen von Bohrkopf, Schaft und Einspannhülse sind weitestgehend zentrisch oder koaxial zur Mittelachse 3 angeordnet.

In dem Schaft 9 und dem Bohrkopf 5 ist eine Längsnut 11 vorhanden, die auch als Sicke bezeichnet wird. Die Längsnut 11 hat einen Querschnitt annähernd in Form eines Kreissegments mit einem Winkel üblicherweise von etwa 90° bis 130°. Die Längsnut 11 erstreckt sich von der Spitze des Bohrers bis vor die Einspannhülse 7. Wegen der Längsnut haben Bohrkopf 5 und Schaft 9 einen Querschnitt annähernd in der Form eines Kreissegments mit einem Winkel von üblicherweise 230° bis 270° (Ergänzungswinkel zum Winkel der Längsnut).

Ein Kühlkanal 13 erstreckt sich über die gesamte Länge des Einlippenbohrers 1. An einem stirnseitigen Ende der Einspannhülse 7 wird Kühlmittel oder eine Mischung aus Kühlmittel und Luft unter Druck in den Kühlkanal 13 gefördert. Das Kühlmittel beziehungsweise das Gemisch aus Kühlmittel und Luft tritt im am gegenüberliegenden vorderen Ende 15 wieder aus dem Kühlkanal 13 aus. Das Kühlmittel hat mehrere Aufgaben. Es sorgt zum einen zur Kühlung und Schmierung der Schneide und der Führungsleisten. Außerdem fördert es die beim Bohren entstandenen Späne über die Längsnut 11 aus dem Bohrloch heraus.

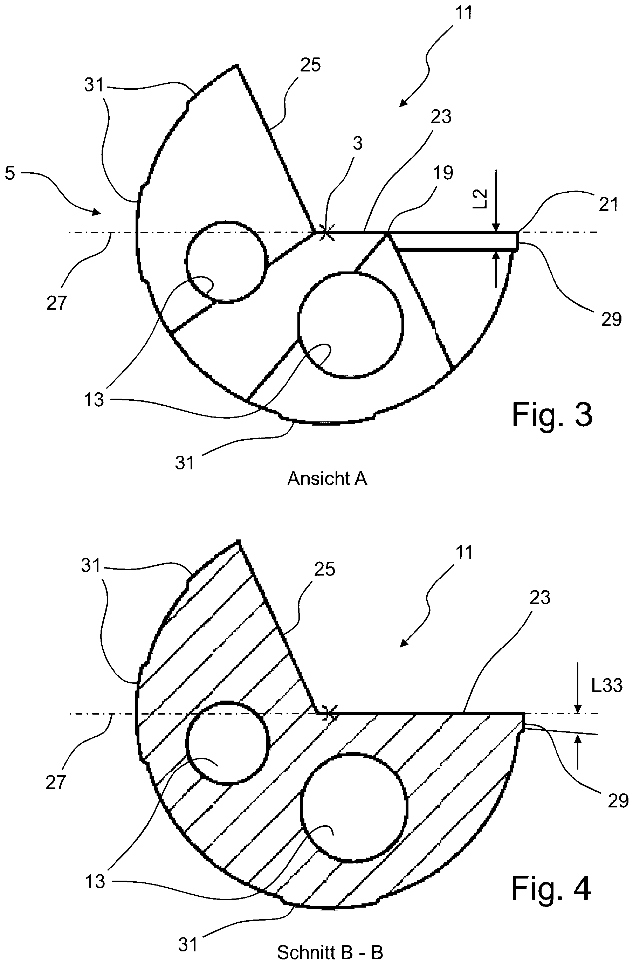

Das vordere Ende 15 ist in der Figur 2 etwas vergrößert dargestellt. Anhand dieser Figur und den zugehörigen Ansichten von vorne beziehungsweise Schnitten (Figuren 3 und 4) werden nachfolgend Elemente des Bohrkopfs 5 näher erläutert.

Eine Schneide 17 hat in ihrer Gesamtheit das Bezugszeichen 17. Die Schneide 17 besteht bei Einlippenbohrern 1 üblicherweise aus einer Innenschneide 17.1 und einer Außenschneide 17.2.
Eine Schneidenspitze trägt das Bezugszeichen 19. Wie bei Einlippenbohrern üblich, ist die Schneidenspitze 19 radial beabstandet zu der Mittelachse 3 angeordnet. Die Innenschneide 17.1 erstreckt sich von der Mittelachse 3 bis zur Schneidenspitze 19. Die Außenschneide 17.2 erstreckt sich von der Schneidenspitze 19 ausgehen in radialer Richtung bis an den Außendurchmesser des Bohrkopfs 5 und endet an einer Nebenschneide 21.

Ein Abstand der Schneidenspitze 19 von der Nebenschneide 21 ist in der Figur 2 mit L₁ bezeichnet.

Die Figur 3 zeigt eine Ansicht von vorne auf das vordere Ende 15 des Einlippenbohrers 1. Aus dieser Ansicht wird deutlich, dass bei diesem Ausführungsbeispiel im Bohrkopf 5 zwei Kühlkanäle 13.1 und 13.2 ausgebildet sind. Es ist jedoch auch möglich, nur einen Kühlkanal 13 oder sogar drei Kühlkanäle 13 vorzusehen.

In der Figur 3 ist die Mittelachse 3 als "X" dargestellt. Gut zu erkennen ist auch die Längsnut 11. Sie wird durch eine Spanfläche 23 und eine Wand 25 begrenzt. Die Spanfläche 23 und die Wand 25 schließen einen Winkel von etwa 130° ein. In dem dargestellten Ausführungsbeispiel verläuft die Spanfläche 23 durch die Mittelachse 3. Durch die Mittelachse 3 verläuft ebenfalls eine durch eine strichpunktierte Linie angedeutete Spanflächenebene 27. Die Spanflächenebene 27 ist eine geometrische Definition, die nicht immer an dem Einlippenbohrer sichtbar ist. Die Spanflächenebene 27 ist dadurch definiert, dass sie parallel zur Spanfläche 23 und durch die Mittelachse 3 verläuft.

Wenn die Spanfläche 23 durch die Mittelachse 3 verläuft, dann fallen Spanflächenebene 27 und Spanfläche 23 zusammen und man kann die Spanflächenebene 27 sehen.

Es hat sich in manchen Anwendungsfällen als vorteilhaft erwiesen, wenn die Spanfläche 23 etwa 0,01 mm bis 0,05 mm unterhalb der Spanflächenebene 27 liegt. Dabei bezieht sich die Zuordnung "unterhalb" auf die in der Figur 3 dargestellte Lage der Spanfläche 23 und der Spanflächenebene 27. Dadurch wird verhindert, dass der Bohrer "drückt". Dieser sehr kleine Abstand lässt sich zeichnerisch in den Figuren nicht darstellen.

In der Figur 3 ist die Innenschneide 17.1 als Linie zwischen der Mittelachse 3 und der Schneidenspitze 19 zu erkennen. Entsprechend ist die Außenschneide 17.2 als Linie zwischen der Schneidenspitze 19 und der Nebenschneide 21 dargestellt. In der Ansicht von vorne fallen die Innenschneide 17.1 und die Außenschneide 17.2 mit der Spanfläche 23 zusammen. Aus Gründen der Übersichtlichkeit der Figur 3 die Bezugszeichen 17.1 und 17.2 nicht eingetragen.

An dem Bohrkopf 5 sind über den Umfang verteilt mehrere Führungsleisten 29 und 31 ausgebildet. Die Führungsleiste 29 und die Spanfläche 23 bilden dort, wo sie einander schneiden, die Nebenschneide 21. Diese Führungsleiste wird nachfolgend als Rundschlifffase 29 bezeichnet. Die Rundschlifffase 29 und die Führungsleisten 31 haben die Aufgabe, den Bohrkopf 5 in der Bohrung zu führen.

Um die Reibung zwischen Bohrkopf 5 und der Wand der Bohrung (nicht dargestellt) zu verringern, ist der Bohrkopf 5 in Umfangsrichtung gesehen zwischen der Rundschlifffase 29 und den Führungsleisten 31 im Durchmesser etwas zurückgesetzt/reduziert.

Dadurch entsteht ein Spalt zwischen der Bohrung (nicht dargestellt) und dem Bohrkopf 5, der die Kontaktfläche zwischen Bohrkopf 5 und der Bohrung auf die Rundschlifffase 29 und die Führungsleisten 31 verkleinert. Außerdem kann in diesen Spalten Kühlmittel zu den Kontaktstellen zwischen Bohrkopf 5 und Bohrung transportiert werden.

Die Figur 4 zeigt einen Schnitt durch den Bohrkopf 5 entlang der Linie B-B gemäß der Figur 2.

Die anhand der Figuren 1 bis 4 dargestellten und beschriebenen Elemente und Bauteile des Einlippenbohrers 1 sind prinzipiell bereits aus dem Stand der Technik bekannt.

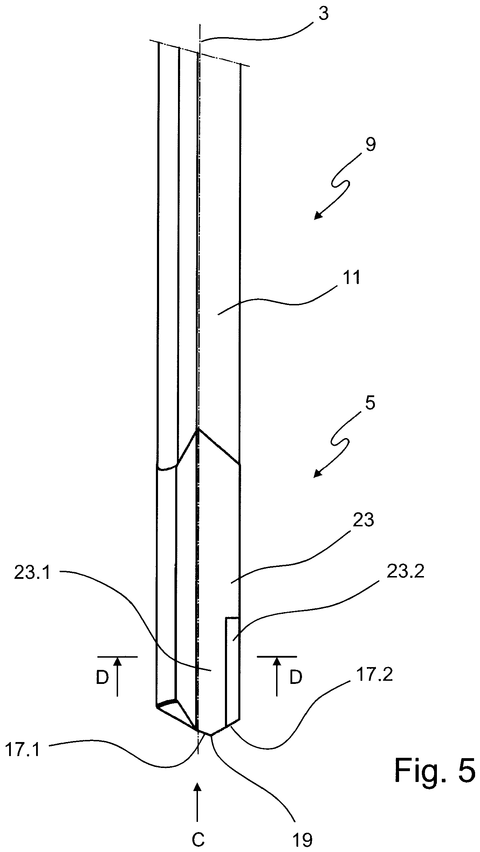

Anhand der Figuren 5 bis 12 werden nun die erfindungsgemäßen Weiterbildungen eines erfindungsgemäßen Einlippenbohrers 1 in verschiedenen Ansichten dargestellt. Aus Gründen der Übersichtlichkeit sind nicht in allen Figuren alle Bezugszeichen eingetragen. So ist beispielsweise in der Figur 5 der Kühlkanal 13 nicht eingezeichnet, obwohl er vorhanden ist.

In der Figur 5 ist das vordere Ende 15 eines erfindungsgemäßen Einlippenbohrers 1 ähnlich wie in Figur 2 dargestellt. In der Figur 5 ist eine erfindungsgemäße Spanfläche 23 von oben dargestellt. Dabei wird deutlich, dass die Spanfläche 23 zumindest im Bereich der Bohrerspitze 19 in eine innere Spanfläche 23.1 und eine äußere Spanfläche 23.2 unterteilt ist.

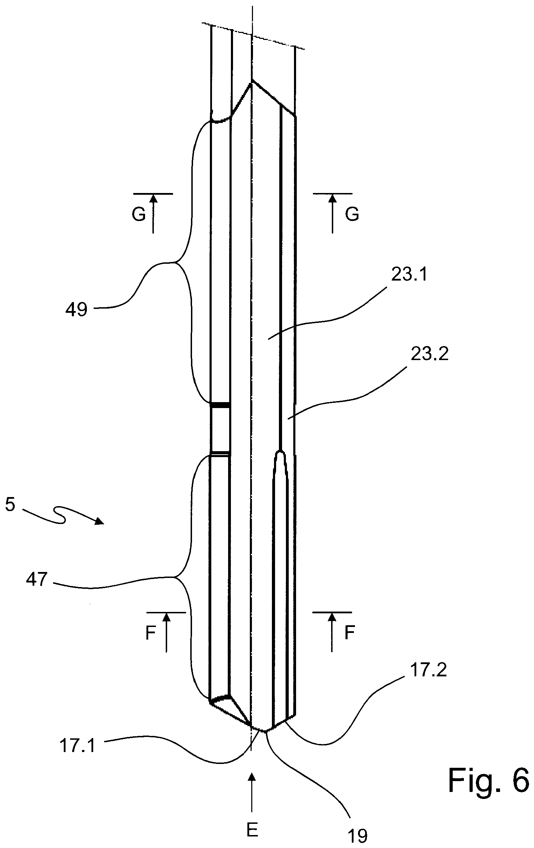

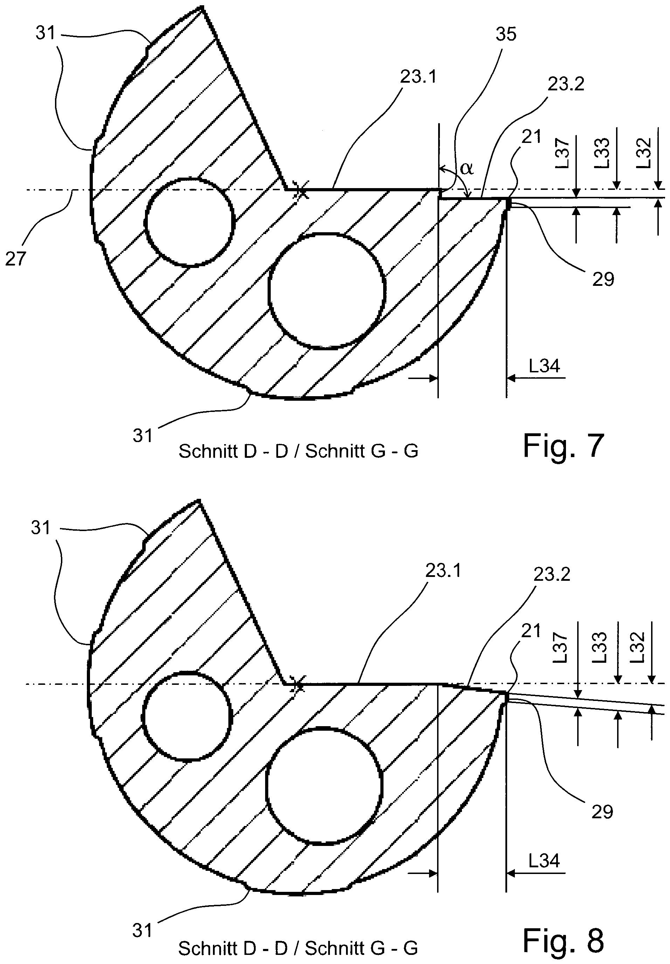

Bei dem dargestellten Ausführungsbeispiel ist die äußere Spanfläche 23.2 dadurch hergestellt worden, dass von der ursprünglichen Spanfläche 23 ein Teil weggeschliffen wird. Das kann auf verschiedene Weisen erfolgen, wie nachfolgend erläutert wird. In der Figur 7 ist ein erstes Ausführungsbeispiel dargestellt. Es zeigt den Schnitt entlang der Linie D-D in der Figur 5 und den Schnitt entlang der Linie G-G aus der Figur 6.

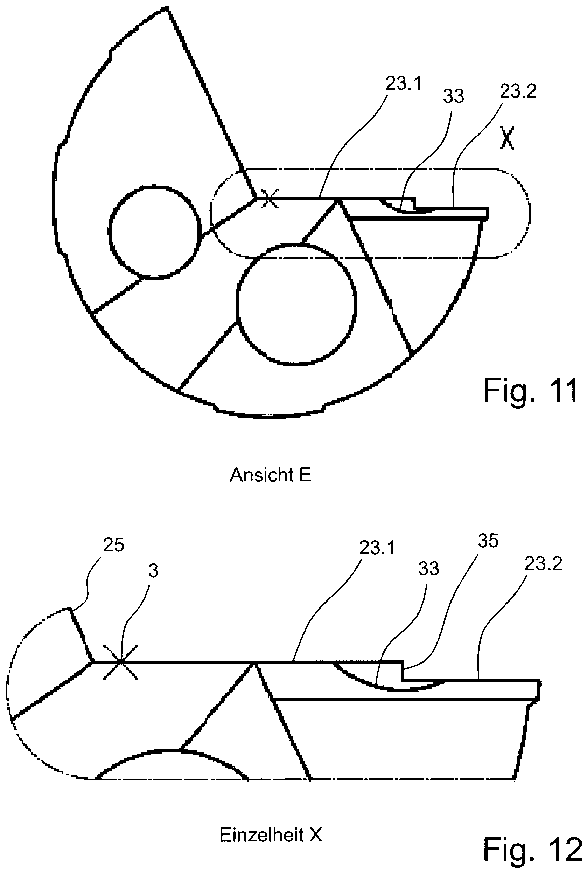

Aus der Figur 7 wird deutlich, dass die äußere Spanfläche 23.2 parallel zur inneren Spanfläche 23.1 und damit auch parallel zur Spanflächenebene 27 verläuft. Da sich die äußere Spanfläche 23.2 in axialer Richtung von der Bohrerspitze 19 in Richtung der Einspannhülse 7 erstreckt, kann die äußere Spanfläche 23.2 durch Schleifen mit einer zylindrischen Schleifscheibe einfach hergestellt werden. Dadurch entsteht ein Absatz zwischen der inneren Spanfläche 23.1 und der äußeren Spanfläche 23.2 mit einer Fläche 35, die weiter unten im Zusammenhang mit der Figur 12 näher erläutert wird.

Zwischen der äußeren Spanflächenebene 23.2 und der Fläche 35 ist ein Winkel α eingetragen, der bei diesem Ausführungsbeispiel 90° beträgt. Der Winkel α liegt bevorzugt in einem Bereich zwischen 90° und 135°; Werte von 90°, 105°, 120° und 135° haben sich in Versuchen als gut geeignet erwiesen.

Es ist somit auch möglich, aus einem Einlippenbohrer 1 mit einer durgehenden Spanfläche 23 (siehe die Figuren 1 bis 4) durch (Nach-)Schleifen die erfindungsgemäße äußere Spanfläche 23.2 herzustellen und damit aus einem handelsüblichen Einlippenbohrer einen erfindungsgemäßen Einlippenbohrer herzustellen.

Aus einem Vergleich der Figuren 5 und 6 wird deutlich, dass die Länge in axialer Richtung der äußeren Spanfläche 23.2 in weiten Grenzen variieren kann. Bei dem Ausführungsbeispiel gemäß Figur 5 erstreckt sich die äußere Spanfläche 23.2 etwa über ein Drittel der Länge des Bohrkopfs 5. Bei dem Ausführungsbeispiel gemäß Figur 6 erstreckt sich die äußere Spanfläche 23.2 über die gesamte Länge des Bohrkopfs 5.

In der Figur 6 sind zwei Gruppen von Führungsleisten vorhanden. Eine erste Gruppe 47 von Führungsleisten 31 ist im Anschluss an die Spitze 19 ausgebildet. Eine zweite Gruppe 49 von Führungsleisten ist axial beabstandet zu der ersten Gruppe 47 angeordnet. Dadurch wird eine noch bessere Führung des Bohrkopfs 5 in der Bohrung erreicht und vor allem kann der Bohrkopf 5 nicht seitlich ausweichen und dadurch die Richtung verlieren.

In der Figur 8 ist ein zweites Ausführungsbeispiel eines erfindungsgemäßen Einlippenbohrers dargestellt. Es zeigt ebenfalls Schnitte entlang der Linien D-D und G-G in den Figuren 5 und 6. Bei diesem Ausführungsbeispiel schließen die innere Spanfläche 23.1 und die äußere Spanfläche 23.2 einen Winkel von etwa 170° bis 175° ein. Auch dieses Ausführungsbeispiel kann aus einem Einlippenbohrer 1 mit einer durchgehenden Spanfläche 23 (siehe die Figuren 1 bis 4) durch (Nach-)Schleifen hergestellt werden.

In beiden Fällen befindet sich die äußere Spanfläche 23.2 im Bereich der Nebenschneide 21 unterhalb der Spanflächenebene 27. Auch hier bezieht sich die Zuordnung "unterhalb" auf die Darstellung in den Figuren 7 und 8. Man könnte den gleichen Sachverhalt auch so formulieren, dass die äußere Spanfläche 23.2 mindestens im Bereich der Nebenschneide 21 einen Abstand zu der Spanflächenebene 27 aufweist und dass die Spanflächenebene 27 im Bereich der Nebenschneide in Drehrichtung des Einlippenbohrers gesehen vor der äußeren Spanfläche 23.2 verläuft.

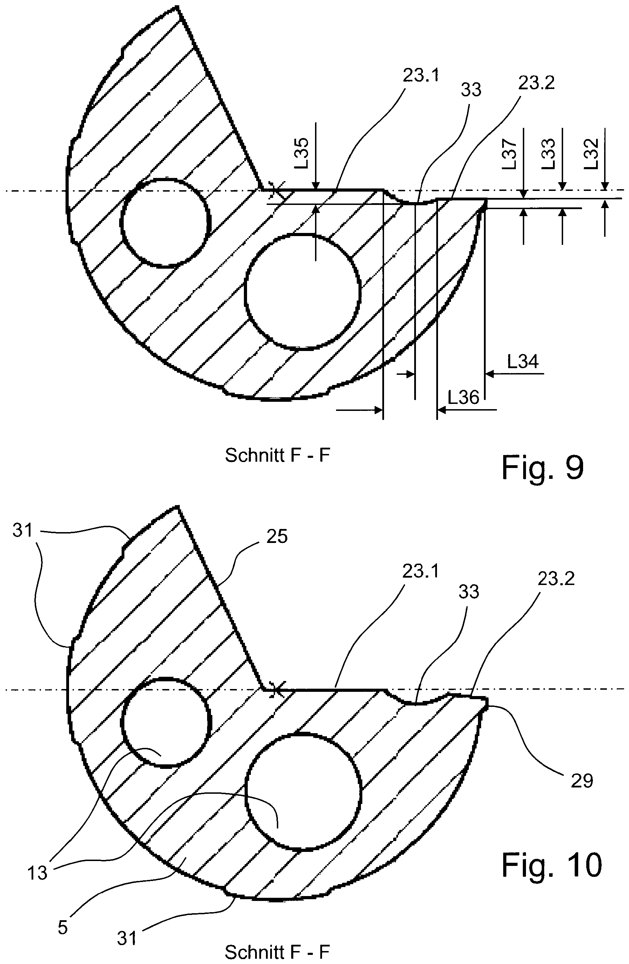

In den Figuren 9 und 10 sind zwei Schnitte entlang der Linie F-F dargestellt. Die Figur 9 ist eine weitere Ausgestaltung des Ausführungsbeispiels gemäß der Figur 7. Die Figur 10 ist eine weitere Ausgestaltung des Ausführungsbeispiels gemäß der Figur 8.

In der Figur 9 ist zusätzlich eine Spanteilernut 33 an dem Übergang zwischen der inneren Spanfläche 23.1 und der äußeren Spanfläche 23.2 ausgearbeitet. Auch die Spanteilernut 33 kann durch Schleifen in axialer Richtung mit einer entsprechend profilierten Schleifscheibe einfach hergestellt werden. Es ist auch denkbar, die Spanteilernut 33 und die äußere Spanfläche 23.2 mit einer entsprechend profilierten Schleifscheibe in einem Arbeitsgang herzustellen.

Die Figur 10 zeigt das Ausführungsbeispiel gemäß der Figur 8 zusätzlich mit einer Spanteilernut 33.

Aus einem Vergleich der Figuren 3 und 4 einerseits mit den Figuren 7, 8 und 9 wird deutlich, dass durch das Herstellen der äußeren Spanfläche 23.2 gewissermaßen als Nebeneffekt die Breite L37 der Rundschlifffase 29 reduziert wird.

Dieser Effekt ist gewollt. Es hat sich überraschenderweise bei Versuchen im Zusammenhang mit der erfindungsgemäßen Geometrie der Spanfläche 23 herausgestellt, dass der Bohrkopf 5 besser in der Bohrung geführt wird, wenn die Rundschlifffase 29 schmaler als üblich ist.

In der Figur 11 ist eine Ansicht von vorne auf das Ausführungsbeispiel gemäß der Figur 6 dargestellt. Weil bei diesem Ausführungsbeispiel die Spanteilernut 33 sich nicht über die gesamte Länge des Bohrkopfs 5 erstreckt, ist der Absatz zwischen der inneren Spanfläche 23.1 und der äußeren Spanfläche 23.2 in dieser Ansicht zu erkennen.

In der Figur 12 ist die Einzelheit x aus der Figur 11 vergrößert dargestellt. Aus dieser vergrößerten Darstellung wird deutlich, dass der Absatz zwischen der inneren Spanfläche 23.1 und der äußeren Spanfläche 23.2 durch eine Fläche 35 überbrückt wird. Bei diesem Ausführungsbeispiel ist die Fläche 35 rechtwinklig zur inneren und äußeren Spanfläche 23.1 und 23.2 ausgebildet.

Es ist erfindungsgemäß auch möglich, dass beispielsweise der Winkel zwischen der Fläche 35 und der äußeren Spanfläche 23.2 größer als 90° ist. Er kann beispielsweise 105° oder 120° betragen. Es ist auch nicht zwingend gefordert, dass eine scharfe Kante zwischen der Fläche 35 und der inneren Spanfläche 23.1 vorhanden ist. Es ist auch möglich, dass dort ein Radius ausgebildet wird.

Je nach Bedarf kann der gesamte Bohrkopf 5 mit einer Funktionsbeschichtung versehen werden. Es ist jedoch auch möglich, dass nur Teilbereiche mit einer Funktionsbeschichtung versehen werden, beispielsweise kann die Spanfläche (23.1 und/oder 23.2) mit einer Verschleißschutzbeschichtung versehen werden. Entsprechendes gilt auch für die Rundschlifffase 29 und die Führungsleisten 31.

Das Zusammenspiel der auf den Bohrkopf 5 wirkenden Kräfte beim Zerspanen führt dazu, dass der Mittenverlauf der mit einem erfindungsgemäßen Einlippenbohrer 1 gebohrten Bohrungen deutlich besser ist als bei einem herkömmlichen Einlippenbohrer, der eine durchgehende Spanfläche hat, wie sie in den Figuren 2 bis 4 dargestellt ist. Dieser Effekt wird nachfolgend durch den Vergleich der Diagramme in den Figuren 13 und 14 belegt.

In der Figur 13 ist das Ergebnis einer Auswertung von einer Vielzahl von Bohrungen in Diagrammform dargestellt. Die Bohrungen wurden mit einem herkömmlichen Einlippenbohrer 1 gemäß Figuren 1 bis 4 hergestellt. Dabei wird über der Zahl der Bohrungen der Mittenverlauf in Millimetern aufgetragen.

Als Mittenverlauf wird beim Bohrvorgang die Abweichung des tatsächlichen Bohrungsverlaufs (= die Lage der Mittelachse der realen Bohrung) von der theoretischen Mittelachse der herzustellenden Bohrung am Ende der Bohrung angesehen. Der Mittenverlauf ist ein Aspekt der Bohrungsqualität. Man ist bestrebt einen möglichst kleinen Mittenverlauf zu erreichen. Im Idealfall, wenn sich die reale Bohrung genau dort befindet, wo sie sein sollte, ist der Mittenverlauf gleich null. Einlippenbohrer zeichnen sich gegenüber anderen Bohrern durch einen vergleichsweise geringen Mittenverlauf aus.

Eine Toleranzgrenze für den Mittenverlauf ist durch die waagrechte Linie 37 veranschaulicht. Eine erste Linie 39 zeigt die im Zusammenhang mit einem Werkzeug 1 ermittelten Werte des Mittenverlaufs. Eine zweite Linie 41 zeigt die entsprechenden Werte, die mit einem Werkzeug 2 der gleichen Ausführung erzielt wurde.

Man kann bei beiden Linien 39 und 41 erkennen, dass mit zunehmender Zahl von Bohrungen, das heißt mit zunehmendem Verschleiß der Schneide, der Mittenverlauf tendenziell schlechter wird. Das bedeutet, dass die Bohrung immer weiter seitlich ausweicht. Die Linie 39 erreicht die Toleranzgrenze 37 bei der 24ten Bohrung erreicht. Bei dem Werkzeug 2 (siehe die Linie 41) wird bei der 28ten Bohrung die Toleranz 37 sogar überschritten.

Diese Situation ist nicht optimal, weil das Werkzeug nachgeschliffen werden muss, sobald der Mittenverlauf in die Nähe der Toleranzgrenze kommt. Wenn der Mittenverlauf überschritten wird, ist das bearbeitete Werkstück Ausschuss.

Die Figur 14 zeigt die Ergebnisse einer Auswertung der Ergebnisse, die mit zwei erfindungsgemäßen Werkzeugen erzielt wurden. Ansonsten waren die Randbedingungen der Versuche mit herkömmlichen und erfindungsgemäßen Einlippenbohrern gleich.

Die Linien 43 und 45 in der Figur 14 zeigen die Ergebnisse eines ersten erfindungsgemäßen Werkzeugs und eines zweiten erfindungsgemäßen Werkzeugs. Dabei wird im Vergleich mit der Figur 13 deutlich, dass erstens der Mittenverlauf sehr viel kleinere Werte annimmt. Der größte Wert des Mittenverlaufs beträgt etwa 0,6 mm (siehe die Linie 43 bei der Bohrung Nr. 11). Außerdem ist zu erkennen, dass der Mittenverlauf über die Zahl der Bohrungen nahezu konstant bleibt, so dass die gesamte Standzeit des erfindungsgemäßen Werkzeugs ausgenutzt werden kann.

Anders ausgedrückt: Durch den erfindungsgemäßen Anschliff hat sich die Standzeit deutlich erhöht und gleichzeitig ist der Mittenverlauf auf etwa die Hälfte reduziert worden. Dieser beeindruckende Effekt ergibt sich durch das erfindungsgemäße Vorsehen einer äußeren Spanfläche 23.2. Idealerweise wird diese äußere Spanfläche 23.2 noch mit einer Spanteilernut 33 kombiniert. Gleichzeitig wird die Breite der Rundschlifffase 29 reduziert.

Alle dazu erforderlichen Maßnahmen lassen sich fertigungstechnisch durch Schleifoperationen in Längsrichtung des Bohrkopfs 5 realisieren.

Diese Geometrie wird beim Hersteller in den Bohrkopf 5 eingearbeitet und muss beim Nachschleifen eines stumpf gewordenen Einlippenbohrers 1 nicht überarbeitet werden.

Das bedeutet, dass ein stumpf gewordener erfindungsgemäßer Einlippenbohrer 1 auch beim Kunden auf einfachste Weise nachgeschliffen werden kann. Dazu muss lediglich im Bereich der Schneide 17 an der Freifläche etwas Material abgetragen werden. Die Spanfläche 23.1 und 23.2 muss beim Kunden für das Nachschleifen nicht bearbeitet werden. Daher kann ein erfindungsgemäßer Einlippenbohrer 1 sehr oft nachgeschliffen werden.

Des Weiteren kann eine eventuell vorhandene Verschleißschutzbeschichtung auf der Spanfläche 23.1 und 23.2 sowie der Rundschlifffase 29 und den Führungsleisten 31 erhalten bleiben, wenn der Bohrer nachgeschliffen wird.

Nachfolgend werden einige Begriffe stichwortartig erläutert und definiert.

**Einlippenbohrer** sind eine spezielle Variante der Tiefbohrwerkzeuge. Unter Tiefbohrwerkzeugen werden Werkzeuge verstanden, die nach verschiedenen bekannten Tiefbohrsystemen arbeiten, d.h. BTA, Ejektor, Einlippenbohrer usw.

Einlippenbohrer sind lang und schlank und weisen eine Mittelachse auf. Sie werden verwendet zum Herstellen von Bohrungen mit einem großen Verhältnis von Länge zu Durchmesser. Sie werden vorwiegend in der industriellen Metallbearbeitung eingesetzt, wie bei der Produktion von Motorkomponenten, insbesondere bei der Produktion von Common-Rails oder Getriebewellen.

Einlippenbohrer werden üblicherweise in einem Durchmesserbereich von ca. 0,5 bis 50 mm eingesetzt. Es sind Bohrungen mit einer Länge von bis etwa 6.000 mm möglich.

Das Verhältnis von Länge zu Durchmesser (L/D) der Bohrung liegt üblicherweise in einem Bereich von ca. 10 bis über 100; es kann aber auch ca. 5 und bis etwa 250 betragen.

Einlippenbohrer zeichnen sich dadurch aus, dass eine Bohrung in hoher Qualität in einem Hub erzeugt werden kann. Sie können in Werkzeugmaschinen wie z.B. Drehmaschinen, Bearbeitungszentren oder speziellen Tiefbohrmaschinen, eingesetzt werden.

Der Zerspanungsvorgang erfolgt durch eine Relativbewegung des Bohrers zum Werkstück in Drehrichtung um eine gemeinsame Mittelachse, sowie einer Relativbewegung des Bohrers auf das Werkstück zu in Richtung der gemeinsamen Mittelachse (Vorschubbewegung). Die Drehbewegung kann durch den Bohrer und/oder das Werkstück erfolgen. Das Gleiche gilt für die Vorschubbewegung.

Als **Mittenverlauf** wird beim Bohrvorgang die Abweichung [mm] des tatsächlichen Bohrungsverlaufs von der theoretischen Mittelachse des Bohrers angesehen. Der Mittenverlauf ist ein Aspekt der Bohrungsqualität. Man ist bestrebt einen möglichst kleinen Mittenverlauf zu erreichen. Im Idealfall tritt überhaupt kein Mittenverlauf auf. Einlippenbohrer zeichnen sich gegenüber anderen Bohrern durch einen vergleichsweise geringen Mittenverlauf aus.

Der Mittenverlauf hängt unter anderem davon ab, ob die Drehbewegung durch den Bohrer oder das Werkstück oder durch beide erfolgt. Die Erfahrung zeigt, dass die kleinsten Mittenverlaufswerte erzielt werden, wenn die Drehbewegung durch das Werkstück oder durch Werkstück und Bohrer erfolgt.

Durch den Kühlkanal wird Kühlmittel, oder eine Mischung aus Kühlmittel und Luft (Minimalmengenschmierung) zum Schmieren und Kühlen des Bohrkopfs und der Führungsleisten sowie zum Ausspülen der Späne gefördert. Kühlmittel wird am hinteren Ende unter Druck zugeführt, passiert den Kühlkanal und tritt am Bohrkopf aus. Der Druck ist abhängig vom Durchmesser und von der Länge des Bohrers.

Durch einen angepassten Druck des Kühlmittels können Einlippenbohrer sehr kleine und sehr tiefe Bohrungen in einem Zug bohren.

Der Bohrkopf hat mindestens eine Schneide, es können auch mehrere Schneiden vorhanden sein. Die **Schneide** ist der Bereich, der an der Zerspanung beteiligt ist; sie wird gebildet aus Spanfläche und Freifläche. Die **Spanfläche** ist der Bereich, auf dem der Span abläuft; sie kann auch aus mehreren Teil-Flächen bestehen (siehe die Bezugszeichen 23.1 und 23.2 in den Figuren).

Bei Vollbohrwerkzeugen erstreckt sich die Schneide von der Mittelachse des Bohrkopfes bis zu seinem Umfang. Die **Freifläche** ist die Fläche an der Spitze des Bohrkopfs, die der bearbeiteten Werkstückoberfläche gegenüber liegt.

Die **Schneidkante** ist die Berührungslinie zwischen Spanfläche und Freifläche. Die Schneide ist meistens in mehrere gerade Teil-Schneiden aufgeteilt.

Die Gesamtform aller schneidenden und nicht schneidenden Flächen stirnseitig am Bohrkopf wird als **Anschliff** bezeichnet. Dazu gehören auch Flächen, die nicht direkt an die Schneidkanten angrenzen, beispielsweise Flächen zur Lenkung des Kühlmittelstroms oder auch zusätzliche Freiflächen, um den Bohrer sauber schneiden zu lassen.

Der Anschliff bestimmt zu einem großen Teil die Formung der Späne und wird auf den zu bearbeitenden Werkstoff abgestimmt. Ziele der Abstimmung sind dabei unter anderem die Formung möglichst günstige Späne, eine hohe Bearbeitungsgeschwindigkeit, eine möglichst lange Lebensdauer des Bohrers und die Einhaltung der erforderlichen Qualitätsmerkmale der Bohrung wie z.B. Durchmesser, Oberfläche oder Geradheit (Mittenverlauf).

Der Bohrkopf besteht aus einem zum Schneiden geeigneten Material, meist Hartmetall, aber auch Cermet, Keramik oder andere geeignete Materialien.

Als Hartmetall wird meist Sinterhartmetall mit den Bestandteilen WC und Co verwendet.

Durch das Schneiden verschleißt die Schneide, wodurch der Bohrer nicht mehr verwendet werden kann
Durch **Nachschleifen** kann ein stumpf gewordener Einlippenbohrer wieder verwendet werden. Nachschleifen bedeutet ein meist stirnseitiges Nachsetzen/Abschleifen des verschlissenen Teils des Bohrkopfes, bis alle verschlissenen Bereiche (insbesondere von Spanfläche und Freifläche) abgetragen sind und wieder eine neue und scharfe Schneide entsteht. Danach weist der Anschliff wieder seine ursprüngliche Gestalt auf.

Ein Bohrwerkzeug kann so oft nachgeschliffen werden, bis kein vollständiger Anschliff mehr am Bohrkopf angebracht werden kann oder bis durch die kürzer werdenden Führungsfasen und -leisten keine ausreichende Führung des Werkzeugs mehr gegeben ist.

Zur Erhöhung der Lebensdauer kann der Bohrkopf mit einer Beschichtung als Verschleißschutz versehen sein; meist aus der Gruppe Metall-Nitride oder Metall-Oxyde; auch in mehreren abwechselnden Lagen. Die Dicke beträgt üblicherweise ca. 0,0005 bis 0,010 mm. Die Beschichtung erfolgt durch chemische oder physikalische Vakuumbeschichtungsverfahren. Die Beschichtung kann am Umfang des Bohrkopfes, an den Freiflächen oder an den Spanflächen vorgesehen sein, teilweise kann auch der gesamte Bohrkopf beschichtet werden.

Beim Nachschleifen wird die Beschichtung durch die Schleifscheibe zumindest an den Flächen entfernt, die nachgeschliffen werden. An den anderen Flächen des Anschliffs bleibt die Beschichtung erhalten.

Am Umfang des Bohrkopfes sind **Führungsleisten** angeordnet zur Abstützung der beim Schneiden entstehenden Schnittkräfte in der gebohrten Bohrung.

Führungsleisten sind Zylindersegmente mit dem Durchmesser des Bohrkopfes; sie liegen während des Bohrvorgangs an der Bohrungswand an. In Umfangsrichtung zwischen den Führungsleisten sind am Bohrkopf radial zurückgesetzte Segmente mit kleinerem Durchmesser angeordnet, so dass ein Spalt zwischen Bohrungswand und Bohrkopf entsteht. Der Spalt dient der Ansammlung von Kühlmittel zur Kühlung und Schmierung der Führungsleisten.

Es gibt verschiedene Anordnungen von Führungsleisten, Ausführung abhängig vom zu bearbeitenden Werkstoff. Die erste Führungsleiste, die sich entgegen der Drehrichtung des Bohrers an die Spanfläche anschließt, wird als **Rundschlifffase** bezeichnet.

Als **Nebenschneide** wird die Berührungslinie (Kante) zwischen Spanfläche und Rundschlifffase bezeichnet. Der Schnittpunkt zwischen Außenschneide und Nebenschneide wird als **Schneidecke** bezeichnet.

## Patentansprüche

1. Einlippenbohrer umfassend einen Bohrkopf (5), wobei der Bohrkopf (5) eine Drehachse (3), einen Bohrdurchmesser (D), eine Schneide, eine Nebenschneide (21) und eine Längsnut (11) zur Spanabfuhr aufweist, wobei sich die Schneide (17) von der Drehachse (3) bis zum Durchmesser (D) des Bohrkopfs (5) erstreckt, wobei die Schneide (17) eine Spanfläche (23) aufweist, die eine innere Spanfläche (23.1) und eine äußere Spanfläche (23.2) umfasst, wobei die innere Spanfläche (23.1) radial innen und in unmittelbarer Nähe der Drehachse (3) liegt, wobei die äußere Spanfläche (23.2) radial außen liegt und an die innere Spanfläche (23.1) anschließt, wobei der Bohrkopf (5) eine Spanflächen-Ebene (27) aufweist, die durch die Drehachse (3) und parallel zu der inneren Spanfläche (23.1) verläuft, wobei die innere Spanfläche (23.1) in einer Ansicht von vorne auf den Bohrkopf (5) in unmittelbarer Nähe der Spanflächen-Ebene (27) liegt, und wobei die äußere Spanfläche (23.2) im Bereich der Nebenschneide (21) in Drehrichtung des Einlippenbohrers hinter der Spanflächen-Ebene (27) liegt, **dadurch gekennzeichnet, dass** der Abstand (L32) der Nebenschneide (21) zur Spanflächen-Ebene (27) um mindestens 0,05 mm größer ist als der Abstand der inneren Spanfläche (23.1) zur Spanflächen-Ebene (27).

2. Einlippenbohrer nach Anspruch 1, **dadurch gekennzeichnet, dass** die innere Spanfläche (23.1) und die äußere Spanfläche (23.2) parallel zueinander verlaufen.

3. Einlippenbohrer nach Anspruch 1, **dadurch gekennzeichnet, dass** die innere Spanfläche (23.1) und die äußere Spanfläche (23.2) einen stumpfen Winkel einschließen.

4. Einlippenbohrer nach einem der vorhergehenden Ansprüche, **dadurch gekennzeichnet, dass** zwischen der inneren Spanfläche (23.1) und der äußeren Spanfläche (23.2) ein Absatz vorhanden ist.

5. Einlippenbohrer nach einem der vorhergehenden Ansprüche, **dadurch gekennzeichnet, dass** zwischen der inneren Spanfläche (23.1) und der äußeren Spanfläche (23.2) eine Spanteilernut (33) vorhanden ist.

6. Einlippenbohrer nach einem der vorhergehenden Ansprüche, **dadurch gekennzeichnet, dass** ein Abstand (L32) zwischen Spanflächen-Ebene (27) und Nebenschneide (21) zwischen 1% und 5%, bevorzugt etwa 2,5%, des Bohrdurchmessers (D) beträgt.

7. Einlippenbohrer nach einem der vorhergehenden Ansprüche, **dadurch gekennzeichnet, dass** er mindestens eine Führungsleiste (31) aufweist.

8. Einlippenbohrer nach Anspruch 7, **dadurch gekennzeichnet, dass** eine Führungsleiste als Rundschlifffase (29) ausgebildet ist, und dass eine Höhe (L2) der Rundschlifffase (29) zwischen 1% und 4%, bevorzugt etwa 2,5%, des Bohrdurchmessers (D) beträgt.

9. Einlippenbohrer nach einem der Ansprüche 7 oder 8, **dadurch gekennzeichnet, dass** er zwei Gruppen von Führungsleisten aufweist, dass eine erste Gruppe (47) von Führungsleisten in Bereich einer Bohrerspitze (15) angeordnet ist, und dass eine zweite Gruppe (49) von Führungsleisten axial beabstandet zu der ersten Gruppe (47) an dem Bohrkopf (5) angeordnet ist.

10. Einlippenbohrer nach einem der vorhergehenden Ansprüche, **dadurch gekennzeichnet, dass** er eine Einspannhülse (7) und einen Schaft (9) umfasst, und dass die Längsnut (11) in dem Bohrkopf (5) und mindestens teilweise in dem Schaft (9) ausgebildet ist.

11. Einlippenbohrer nach einem der vorhergehenden Ansprüche, **dadurch gekennzeichnet, dass** zumindest der Bohrkopf (5) aus Hartmetall besteht.

12. Einlippenbohrer nach einem der vorhergehenden Ansprüche, **dadurch gekennzeichnet, dass** sowohl der Bohrkopf (5) als auch der Schaft (9) aus Hartmetall bestehen.

13. Einlippenbohrer nach einem der vorhergehenden Ansprüche, **dadurch gekennzeichnet, dass** der Bohrkopf (5) ganz oder teilweise mit einer Hartstoffbeschichtung versehen ist.

14. Verfahren zum Herstellen eines Einlippenbohrers (1) nach einem der Ansprüche 1 bis 13, umfassend die folgenden Schritte:
Herstellen eines erfindungsgemäßen Bohrkopfs (5) ausgehend von einem Rohling durch Schleifen.

15. Verfahren nach Anspruch 14, **dadurch gekennzeichnet, dass** in einer Spanfläche (23) die äußere Spanfläche (23.2) und optional auch die Spanteilernut (33) durch Schleifen hergestellt wird.

16. Verfahren nach Anspruch 14 oder 15, **dadurch gekennzeichnet, dass** mindestens ein Teil der Oberfläche des Bohrkopfs (5) mit einer Funktionsbeschichtung versehen wird.

## Claims

1. A single-lip drill comprising a drill head (5), wherein the drill head (5) has a rotational axis (3), a drill diameter (D), a cutting edge, a minor cutting edge (21) and a longitudinal groove (11) for chip removal, the cutting edge (17) extending from the rotational axis (3) to the diameter (D) of the drill head (5), the cutting edge (17) having a rake face (23), wherein the rake face (23) comprises an inner rake face (23.1) and an outer rake face (23.2), wherein the inner rake face (23.1) is radially to the inside and in the immediate vicinity of the axis of rotation (3), wherein the outer rake face (23.2) is radially to the outside and adjoins the inner rake face (23.1), wherein the drill head (5) comprises a rake face plane (27), that runs through rotational axis (3) and parallel to the inner rake face plane (23.1), wherein the inner rake face (23.1) is in a view from the front toward the drill head (5) in the immediate vicinity of the rake face plane (27), and wherein the outer rake face (23.2) in the region of the minor cutting edge (5) in rotational direction of the single-lip drill lies behind the rake face level (27), **characterized in, that** the distance (L32) of the minor cutting edge (21) to the rake face plane (27) is at least 0,05 mm greater than the distance (L32) of the inner rake face (23.1) to the rake face plane (27).

2. The single-lip drill according to Claim 1, **characterized in that** the inner rake face (23.1) and the outer rake face (23.2) run parallel to each other.

3. The single-lip drill according to Claim 1, **characterized in that** the inner rake face (23.1) and the outer rake face (23.2) form an obtuse angle.

4. The single-lip drill according to any one of the preceding claims, **characterized in that** a set-off is present between the inner rake face (23.1) and the outer rake face (23.2).

5. The single-lip drill according to any one of the preceding claims, **characterized in that** a chip breaker groove (33) is present between the inner rake face (23.1) and the outer rake face (23.2).

6. The single-lip drill according to any one of the preceding claims, **characterized in that** it has a minor cutting edge (21), that the minor cutting edge (21) is located below the rake face plane (27), and that a distance (L32) between rake face plane (27) and minor cutting edge (21) is between 1% and 5%, preferably about 2.5%, of the drilling diameter (D).

7. The single-lip drill according to any one of the preceding claims, **characterized in that** it comprises at least one guide pad (31).

8. The single-lip drill according to Claim 7, **characterized in that** a guide pad is formed as a circular land (29), and that a height (L2) of the circular land (29) is between 1% and 4%, preferably about 2.5%, of the bore diameter (D).

9. The single-lip drill according to any one of Claims 7 or 8, **characterized in that** it comprises two groups of guide pads, that a first group (47) of guide pads is arranged in the region of a drill tip (15), and that a second group (49) of guide pads is arranged axially spaced apart from the first group (47) on the drill head (5).

10. The single-lip drill according to any one of the preceding claims, **characterized in that** it comprises a clamping sleeve (7) and/or a shank (9), and **in that** the longitudinal groove (11) is formed in the drill head (5) and at least partially in the shank (9).

11. The single-lip drill according to any one of the preceding claims, **characterized in that** at least the drill head (5) consists of carbide.

12. The single-lip drill according to any one of the preceding claims, **characterized in that** both the drill head (5) and the shank (9) consist of carbide.

13. The single-lip drill according to any one of the preceding claims, **characterized in that** the drill head (5) is completely or partially provided with a hard material coating.

14. Method of manufacturing a single-lip drill (1) according to any one of claims 1 to 13, comprising the following steps:
Manufacturing a drill head (5) according to the invention starting from a blank by grinding.

15. Method according to claim 14, **characterized in, that** in a rake face (23) the outer rake face (23.2) and optionally also the chip breaker groove (33) is produced by grinding.

16. Method according to claim 14 or 15, **characterized in, that** at least a part of the surface of the drill head (5) is provided with a functional coating.

## Revendications

1. Foret à une lèvre comprenant une tête de perçage (5), dans lequel la tête de perçage (5) présente un axe de rotation (3), un diamètre de perçage (D), un tranchant, un tranchant secondaire (21) et une rainure longitudinale (11) pour l'évacuation des copeaux, dans lequel le tranchant (17) s'étend à partir de l'axe de rotation (3) jusqu'au diamètre (D) de la tête de perçage (5), dans lequel le tranchant (17) présente une face de coupe (23), qui comprend une face de coupe intérieure (23.1) et une face de coupe extérieure (23.2), dans lequel la face de coupe intérieure (23.1) se situe radialement à l'intérieur et à proximité immédiate de l'axe de rotation (3), dans lequel la face de coupe extérieure (23.2) se situe radialement à l'extérieur et se raccorde à la face de coupe intérieure (23.1), dans lequel la tête de perçage (5) présente un plan de face de coupe (27), qui s'étend à travers l'axe de rotation (3) et parallèlement à la face de coupe intérieure (23.1), dans lequel la face de coupe intérieure (23.1) se situe dans une vue depuis l'avant sur la tête de perçage (5) à proximité immédiate du plan de face de coupe (27), et dans lequel la face de coupe extérieure (23.2) se situe dans la zone du tranchant secondaire (21) dans le sens de rotation du foret à une lèvre derrière le plan de face de coupe (27), **caractérisé en ce que** la distance (L32) entre le tranchant secondaire (21) et le plan de face de coupe (27) est supérieure d'au moins 0,05 mm à la distance entre la face de coupe intérieure (23.1) et le plan de face de coupe (27).

2. Foret à une lèvre selon la revendication 1, **caractérisé en ce que** la face de coupe intérieure (23.1) et la face de coupe extérieure (23.2) s'étendent parallèlement l'une à l'autre.

3. Foret à une lèvre selon la revendication 1, **caractérisé en ce que** la face de coupe intérieure (23.1) et la face de coupe extérieure (23.2) forment un angle obtus.

4. Foret à une lèvre selon l'une quelconque des revendications précédentes, **caractérisé en ce qu'**un épaulement est présent entre la face de coupe intérieure (23.1) et la face de coupe extérieure (23.2).

5. Foret à une lèvre selon l'une quelconque des revendications précédentes, **caractérisé en ce qu'**une rainure brise-copeaux (33) est présente entre la face de coupe intérieure (23.1) et la face de coupe extérieure (23.2).

6. Foret à une lèvre selon l'une quelconque des revendications précédentes, **caractérisé en ce qu'**une distance (L32) entre le plan de face de coupe (27) et le tranchant secondaire (21) est comprise entre 1 % et 5 %, de préférence atteint environ 2,5 % du diamètre de perçage (D).

7. Foret à une lèvre selon l'une quelconque des revendications précédentes, **caractérisé en ce qu'**il présente au moins une barre de guidage (31).

8. Foret à une lèvre selon la revendication 7, **caractérisé en ce qu'**une barre de guidage est réalisée sous la forme d'un chanfrein de polissage (29), et qu'une hauteur (L2) du chanfrein de polissage (29) est comprise entre 1 % et 4 %, de préférence atteint environ 2,5 % du diamètre de perçage (D) .

9. Foret à une lèvre selon l'une quelconque des revendications 7 ou 8, **caractérisé en ce qu'**il présente deux groupes de barres de guidage, qu'un premier groupe (47) de barres de guidage est disposé dans la zone d'une pointe de foret (15), et qu'un deuxième groupe (49) de barres de guidage est disposé axialement à distance du premier groupe (47) sur la tête de perçage (5).

10. Foret à une lèvre selon l'une quelconque des revendications précédentes, **caractérisé en ce qu'**il comprend un manchon de serrage (7) et une tige (9), et que la rainure longitudinale (11) est réalisée dans la tête de perçage (5) et au moins en partie dans la tige (9).

11. Foret à une lèvre selon l'une quelconque des revendications précédentes, **caractérisé en ce qu'**au moins la tête de perçage (5) est constituée de métal dur.

12. Foret à une lèvre selon l'une quelconque des revendications précédentes, **caractérisé en ce qu'**aussi bien la tête de perçage (5) que la tige (9) sont constituées de métal dur.

13. Foret à une lèvre selon l'une quelconque des revendications précédentes, **caractérisé en ce que** la tête de perçage (5) est entièrement ou partiellement pourvue d'un revêtement de matériau dur.

14. Procédé pour fabriquer un foret à une lèvre (1) selon l'une quelconque des revendications 1 à 13, comprenant les étapes suivantes :
la fabrication d'une tête de perçage (5) selon l'invention à partir d'une ébauche par rectification.

15. Procédé selon la revendication 14, **caractérisé en ce que** dans une face de coupe (23) la face de coupe extérieure (23.2) et éventuellement également la rainure brise-copeau (33) est fabriquée par rectification.

16. Procédé selon la revendication 14 ou 15, **caractérisé en ce qu'**au moins une partie de la surface de la tête de perçage (5) est pourvue d'un revêtement fonctionnel.
